# EUROPEAN PATENT APPLICATION

(11) **EP 4 060 240 A1**
(43) Date of publication of application: **21.09.2022**
(21) Application number: 20886408.2
(22) Date of filing: 12.11.2020
(51) Int. Cl.: F24F 1/34, F24F 1/16, F24F 1/30, F24F 1/36

(54) **AIR-CONDITIONER**

(30) Priority: 14.11.2019 JP 2019205906
(71) Applicant: Daikin Industries, Ltd., Osaka-shi, Osaka 530-8323 (JP)
(72) Inventor: SATOU, Ken, Osaka-shi, Osaka 530-8323 (JP); KOUZAI, Seiya, Osaka-shi, Osaka 530-8323 (JP)
(74) Representative: Hoffmann Eitle
(86) International application number: PCT/JP2020/042286
(87) International publication number: WO 2021/095810

(57) **Abstract**

An air conditioner includes: a first refrigerant tube (51) including a first portion (51A), and allowing a flow of a liquid refrigerant; and a second refrigerant tube (52) including a second portion (52A) positioned above the first portion (51A) to be vertically overlapped with the first portion (51A), and allowing a flow of a liquid refrigerant; in which the first portion (51A) is surrounded with a heat insulating material (60).

## Description

### TECHNICAL FIELD

The present disclosure relates to an air conditioner.

### BACKGROUND ART

PATENT LITERATURE 1 discloses an air conditioner including a heat exchanger and a refrigerant flow divider configured to divide a liquid refrigerant into a plurality of paths and flow the refrigerant into the heat exchanger. The refrigerant flow divider includes a flow divider body having an internal branching flow path, and a plurality of refrigerant tubes connected to a lower surface of the flow divider body. The refrigerant tubes are each connected to a liquid header of the heat exchanger. The plurality of refrigerant tubes is connected to the liquid header at portions aligned to be vertically spaced apart from each other.

### CITATION LIST

### [PATENT LITERATURE]

PATENT LITERATURE 1: Japanese Patent No. 6522178

### SUMMARY OF THE INVENTION

### [TECHNICAL PROBLEM]

The heat exchanger and the refrigerant tubes may have frost formed thereon during heating operation under a condition with low outdoor temperature. The air conditioner thus executes the defrosting operation while periodically flowing a refrigerant having high temperature to the heat exchanger in order to melt the frost. The plurality of refrigerant tubes is connected to the liquid header at the portions aligned to be vertically spaced apart from each other. Water obtained by melting the frost during defrosting operation may drop onto a lower refrigerant tube and freeze during repeated heating operation.

It is an object of the present disclosure to provide an air conditioner inhibiting water dropping from an upper one of a plurality of refrigerant tubes aligned vertically from freezing on a lower one of the refrigerant tubes.

### [SOLUTION TO PROBLEM]

(1) The present disclosure provides an air conditioner including:
   a first refrigerant tube including a first portion, and allowing a flow of a liquid refrigerant; and
   a second refrigerant tube including a second portion positioned above the first portion to be vertically overlapped with the first portion, and allowing a flow of a liquid refrigerant; in which
   the first portion is surrounded with a heat insulating material.

   In the air conditioner thus configured, even when frost or the like adhering to the second portion of the second refrigerant tube melts and water adhering to the second portion drops onto the first portion, the dropping water is inhibited from freezing on the first portion since the first portion is provided with the heat insulating material.
(2) Preferably, the first portion and the second portion are in parallel with each other and are aligned vertically.
   When the first portion and the second portion are in parallel with each other and are aligned vertically as in the above configuration, water dropping from the second portion is likely to adhere to the first portion and it is accordingly more effective to provide the heat insulating material on the first portion.
(3) Preferably, the air conditioner further includes a heat exchanger including a liquid header, and
   the first refrigerant tube and the second refrigerant tube are connected to the liquid header.
(4) Preferably, the first portion and the second portion extend horizontally.
(5) Preferably, each of the first portion and the second portion has a first end part connected to the liquid header.
(6) Preferably, the first refrigerant tube includes a curved portion bent upward from an opposite end part of the first end part of the first portion, and a third portion extending upward from the curved portion, and
   the heat insulating material has an end part positioned adjacent to the third portion and at the curved portion.
   Even when water adhering to the third portion flows downward along the third portion and reaches the first portion via the curved portion, this configuration inhibits the water from freezing on the first portion.
(7) Preferably, the heat insulating material is provided right below a position having change in shape of the second refrigerant tube at least in the first portion.
   When the second refrigerant tube is changed in shape due to increase in diameter (flare), curving, or the like, a flow of water adhering to the second refrigerant tube is blocked at the position having change in shape and the water is likely to drop downward. The heat insulating material provided on the first portion right below the position inhibits freezing of the dropping water on the first portion.
(8) Preferably, the air conditioner further includes a case including a bottom plate and accommodating the first refrigerant tube, the second refrigerant tube, and the heat exchanger, and
   the first portion is disposed adjacent to the bottom plate.
   When water obtained by melting frost at an upper or lower refrigerant tube drops and accumulates on the bottom plate (drain pan) of the air conditioner executing defrosting operation, the water may freeze during repeated heating operation and cause an ice-up phenomenon of gradually growing ice upward. The heat insulating material is provided on the first portion disposed adjacent to the bottom plate, to inhibit the first portion from being directly covered with ice even when the ice-up phenomenon occurs.
(9) Preferably, the first portion is disposed vertically within a range of 50 mm from the bottom plate, and the second portion is disposed vertically within a range exceeding 50 mm from the bottom plate.
(10) Preferably, the heat insulating material is provided right above a position not provided with an opening or a concave portion of the bottom plate at least in the first portion.
   When the bottom plate of the case is provided with the opening or the concave portion, water dropping thereabove is exhausted from the opening or accumulates in the concave portion, and the first portion is less likely to be covered with ice even when the ice-up phenomenon occurs. If the bottom plate is not provided with the opening or the concave portion, the first portion is more likely to be covered with ice due to the ice-up phenomenon. Accordingly, when the heat insulating material is provided on the first portion right above the position not provided with the opening or the concave portion of the bottom plate, the first portion is inhibited from being directly covered with ice.
(11) Preferably, the case is provided with a support plate supporting the liquid header, and the liquid header and the support plate interpose a second heat insulating material.
   This configuration provides the second heat insulating material between the liquid header and the support plate, to inhibit frosting and freezing on the support plate that is cooled by the liquid header.
(12) Preferably, below the first portion, the bottom plate is provided with an opening for drainage,
   the case includes a metal component disposed below and spaced apart from the opening, and
   the metal component below the opening is provided thereon with a slant member having an upper surface slant with respect to a horizontal direction and being lower in heat conductivity than the metal component.

In this configuration, water dropping through the opening of the bottom plate can be received by the slant member and flow due to the slant of the slant member, to inhibit freezing of water on the metal component.

### BRIEF DESCRIPTION OF DRAWINGS

[FIG. 1] FIG. 1 is a schematic configuration diagram of an air conditioner according to an embodiment of the present disclosure.
[FIG. 2] FIG. 2 is a plan view depicting an interior of the air conditioner.
[FIG. 3] FIG. 3 is a perspective view depicting an outdoor heat exchanger of the air conditioner.
[FIG. 4] FIG. 4 is a schematic developed view depicting an outdoor heat exchanger.
[FIG. 5] FIG. 5 is a front view of a liquid header.
[FIG. 6] FIG. 6 is a left side view of the liquid header.
[FIG. 7] FIG. 7 is a sectional view taken along arrow B-B indicated in FIG. 5.
[FIG. 8] FIG. 8 is a sectional view taken along arrow A-A indicated in FIG. 5.

### DESCRIPTION OF EMBODIMENTS

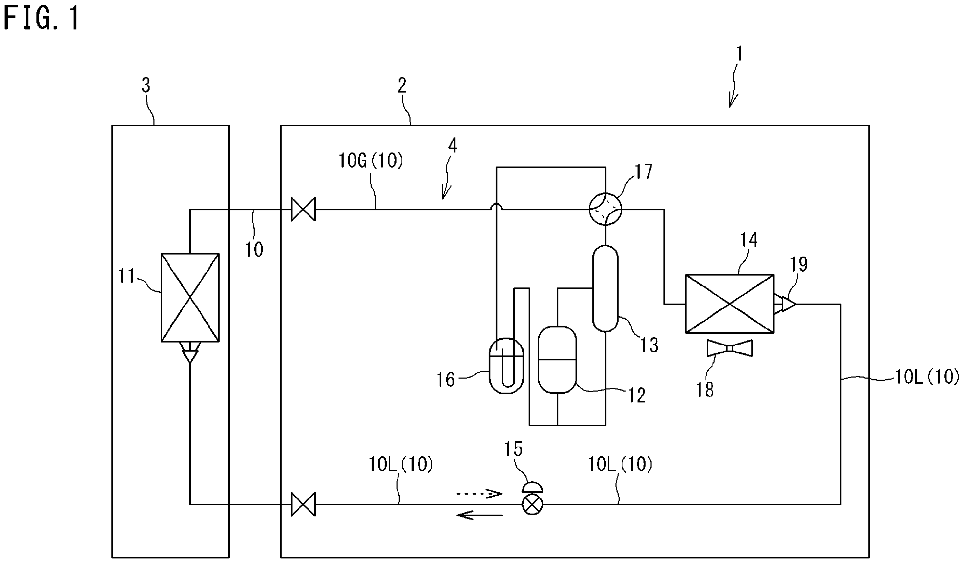

FIG. 1 is a schematic configuration diagram of an air conditioner according to an embodiment of the present disclosure.

An air conditioner 1 functioning as a refrigeration apparatus includes an outdoor unit 2 disposed outdoors and an indoor unit 3 disposed indoors. The outdoor unit 2 and the indoor unit 3 are connected to each other by a connection pipe. The air conditioner 1 includes a refrigerant circuit 4 configured to execute vapor compression refrigeration cycle operation. The refrigerant circuit 4 is provided with an indoor heat exchanger 11, a compressor 12, an oil separator 13, an outdoor heat exchanger 14, an expansion valve (expansion mechanism) 15, an accumulator 16, a four-way switching valve 17, and the like, which are connected by a refrigerant pipe 10. The refrigerant pipe 10 includes a liquid pipe 10L and a gas pipe 10G.

The indoor heat exchanger 11 is configured to execute heat exchange between a refrigerant and indoor air, and is provided in the indoor unit 3. Examples of the indoor heat exchanger 11 include a fin-and-tube heat exchanger of a cross-fin type and a heat exchanger of a microchannel type. The indoor heat exchanger 11 is provided therearound with an indoor fan (not depicted) configured to send indoor air to the indoor heat exchanger 11.

The compressor 12, the oil separator 13, the outdoor heat exchanger 14, the expansion valve 15, the accumulator 16, and the four-way switching valve 17 are provided in the outdoor unit 2.

The compressor 12 is configured to compress a refrigerant sucked from a suction port and discharge the compressed refrigerant from a discharge port. Examples of the compressor 12 include various compressors such as a scroll compressor.

The oil separator 13 is configured to separate lubricant from fluid mixture that contains the lubricant and a refrigerant and is discharged from the compressor 12. The refrigerant thus separated is sent to the four-way switching valve 17 whereas the lubricant is returned to the compressor 12.

The outdoor heat exchanger 14 is configured to execute heat exchange between a refrigerant and outdoor air. The outdoor heat exchanger 14 according to the present embodiment is of the microchannel type. The outdoor heat exchanger 14 is provided therearound with an outdoor fan 18 configured to send outdoor air to the outdoor heat exchanger 14. The outdoor heat exchanger 14 has a liquid side end connected with a refrigerant flow divider 19 including a capillary tube.

The expansion valve 15 is disposed between the outdoor heat exchanger 14 and the indoor heat exchanger 11 in the refrigerant circuit 4, and expands an incoming refrigerant to be decompressed to have predetermined pressure. Examples of the expansion valve 15 include an electronic expansion valve having a variable opening degree.

The accumulator 16 is configured to separate an incoming refrigerant into a gas refrigerant and a liquid refrigerant, and is disposed between the suction port of the compressor 12 and the four-way switching valve 17 in the refrigerant circuit 4. The gas refrigerant thus separated at the accumulator 16 is sucked into the compressor 12.

The four-way switching valve 17 is configured to be switchable between a first state indicated by solid lines in FIG. 1 and a second state indicated by broken lines. The four-way switching valve 17 is switched into the first state while the air conditioner 1 executes cooling operation, and the four-way switching valve 17 is switched into the second state while the air conditioner 1 executes heating operation.

When the air conditioner 1 executes cooling operation, the outdoor heat exchanger 14 functions as a refrigerant condenser (radiator) and the indoor heat exchanger 11 functions as a refrigerant evaporator. A gas refrigerant discharged from the compressor 12 condenses at the outdoor heat exchanger 14, is then decompressed at the expansion valve 15, and evaporates at the indoor heat exchanger 11 to be sucked into the compressor 12. Also during defrosting operation of removing frost adhering to the outdoor heat exchanger 14 due to heating operation, as in cooling operation, the outdoor heat exchanger 14 functions as a refrigerant condenser and the indoor heat exchanger 11 functions as a refrigerant evaporator.

When the air conditioner 1 executes heating operation, the outdoor heat exchanger 14 functions as a refrigerant evaporator and the indoor heat exchanger 11 functions as a refrigerant condenser. A gas refrigerant discharged from the compressor 12 condenses at the indoor heat exchanger 11, is then decompressed at the expansion valve 15, and evaporates at the outdoor heat exchanger 14 to be sucked into the compressor 12.

### [Configuration of outdoor heat exchanger]

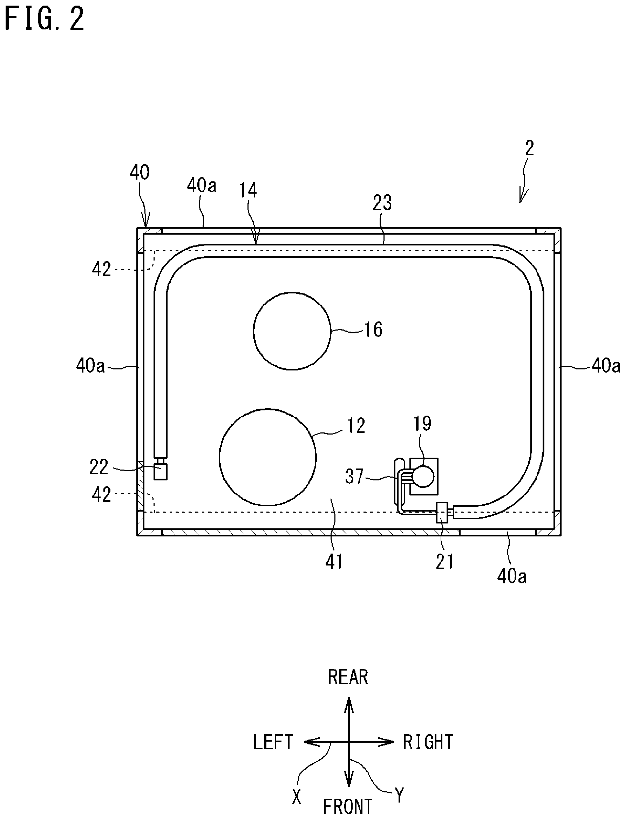

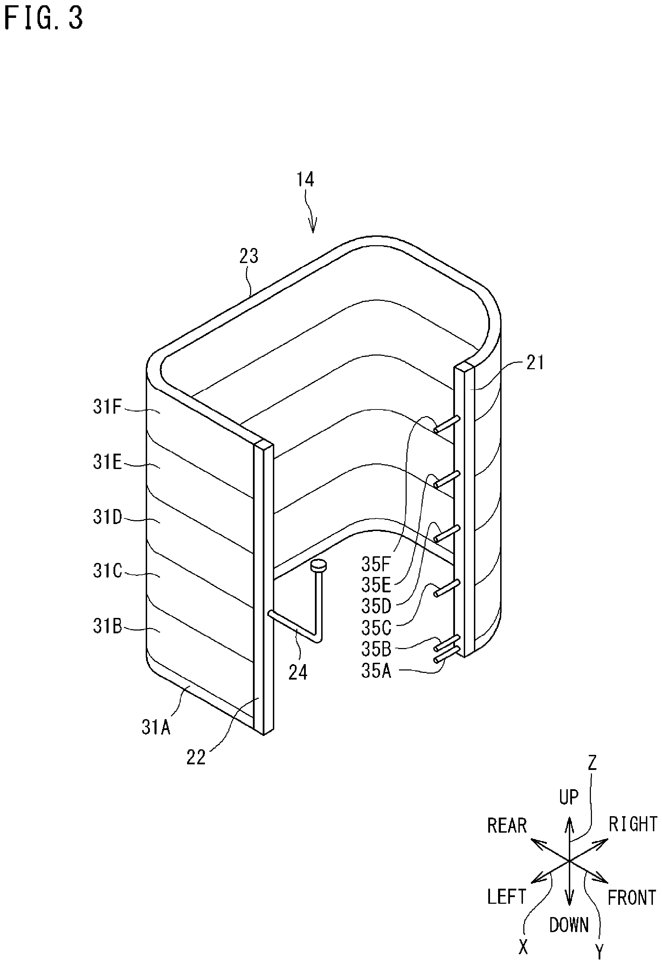

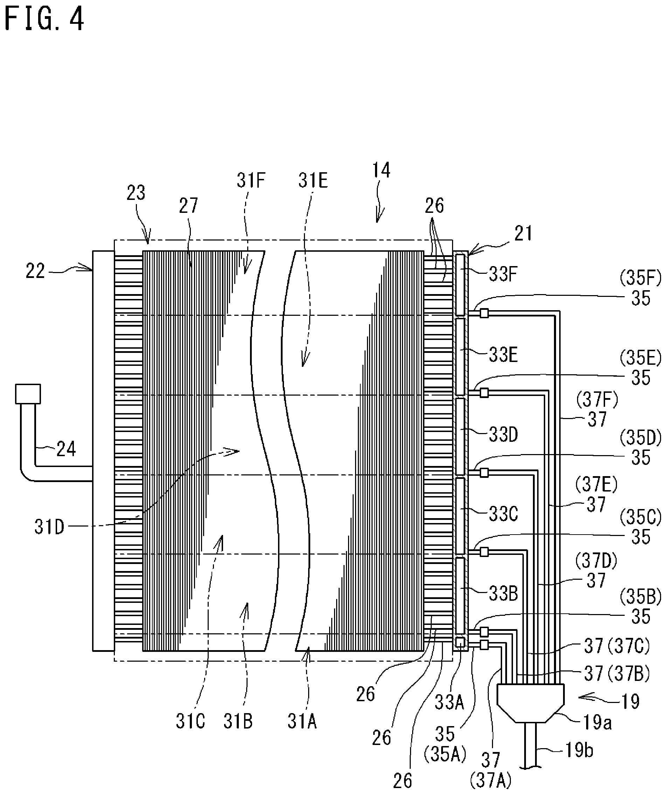

FIG. 2 is a plan view depicting an interior of the air conditioner. FIG. 3 is a perspective view depicting the outdoor heat exchanger of the air conditioner. FIG. 4 is a schematic developed view depicting the outdoor heat exchanger.

The following description may include expressions such as "up", "down", "left", "right", "front (before)", and "rear (behind)", for indication of directions and positions. These expressions follow directions indicated by arrows in FIG. 3, unless otherwise specified. Specifically, the following description assumes that directions indicated by the arrow X in FIG. 3 are lateral directions, directions indicated by the arrow Y are front and rear method, and directions indicated by the arrow Z is vertical directions. These expressions describing the directions and the positions are adopted for convenience of description, and do not limit, unless otherwise specified, directions or positions of the entire outdoor heat exchanger 14 and various constituents of the outdoor heat exchanger 14 to the directions or the positions described herein.

The outdoor unit 2 includes a case 40. The case 40 has a rectangular parallelepiped shape. The case 40 accommodates the compressor 12, the oil separator 13, the outdoor heat exchanger 14, the expansion valve 15, the accumulator 16, the four-way switching valve 17, the outdoor fan 18, and the like described earlier. FIG. 2 depicts, among these constituents, the compressor 12, the outdoor heat exchanger 14, and the accumulator 16, which are disposed on a bottom plate 41 of the case 40.

The outdoor heat exchanger 14 according to the present embodiment faces four surfaces, namely, a left side surface, a rear surface, a right side surface, and a front surface of the case 40 in a top view. Part of the outdoor heat exchanger 14 facing the front surface of the case 40 is shorter than a width of the case 40 in a lateral direction X to face only an end part in the lateral direction X of the front surface of the case 40. The surfaces of the case 40 facing the outdoor heat exchanger 14 are each provided with an opening 40a for air supply. The outdoor heat exchanger 14 includes a pair of headers 21 and 22, and a heat exchanger body 23. The pair of headers 21 and 22 and the heat exchanger body 23 are made of aluminum or an aluminum alloy.

The pair of headers 21 and 22 are disposed at respective ends of the heat exchanger body 23 in a top view. The header 21 is a liquid header configured to allow a liquid refrigerant (gas-liquid two-phase refrigerant) to flow therein. The header 22 is a gas header configured to allow a gas refrigerant to flow therein. The liquid header 21 and the gas header 22 are disposed to have longitudinal directions aligned to vertical directions Z.

As depicted in FIG. 4, the liquid header 21 is connected with the refrigerant flow divider 19. The refrigerant flow divider 19 includes a flow divider body 19a provided therein with a branching flow path, a main refrigerant tube 19b extending from a first end of the flow divider body 19a and connected to the expansion valve 15 (see FIG. 1), and a plurality of capillary tubes 37 extending from a second end of the flow divider body 19a. The capillary tubes 37 are each connected to the liquid header 21 via a connecting tube 35. The gas header 22 is connected with a gas pipe 24.

The heat exchanger body 23 is configured to execute heat exchange between a refrigerant flowing inside and air. As depicted in FIG. 4, the heat exchanger body 23 includes a plurality of heat transfer tubes 26 and a plurality of fins 27. The heat transfer tubes 26 are disposed horizontally. The plurality of heat transfer tubes 26 is aligned in the vertical directions Z. Each of the heat transfer tubes 26 has a first longitudinal end portion connected to the liquid header 21. Each of the heat transfer tubes 26 has a second longitudinal end portion connected to the gas header 22.

Examples of the heat transfer tubes 26 include a flat porous tube having a plurality of holes serving as refrigerant flow paths and aligned horizontally. The plurality of fins 27 is aligned longitudinally along the heat transfer tubes 26. The refrigerant unidirectionally flows from the liquid header 21 to the gas header 22 through the heat exchanger body 23, or unidirectionally flows from the gas header 22 to the liquid header 21 through the heat exchanger body 23.

The heat exchanger body 23 exemplarily depicted in FIG. 3 and FIG. 4 includes a plurality of heat exchange units 31A to 31F. The plurality of heat exchange units 31A to 31F is aligned in the vertical direction Z. The liquid header 21 has an interior vertically zoned respectively for the heat exchange units 31A to 31F. In other words, as depicted in FIG. 3, the interior of the liquid header 21 is provided with flow paths 33A to 33F respectively for the heat exchange units 31A to 31F.

The liquid header 21 is connected with a plurality of connecting tubes 35A to 35F. The connecting tubes 35Ato 35F are provided correspondingly to the flow paths 33Ato 33F. The connecting tubes 35A to 35F are connected with capillary tubes 37A to 37F of the refrigerant flow divider 19.

During heating operation, a liquid refrigerant obtained through dividing by the refrigerant flow divider 19 flows through the capillary tubes 37A to 37F and the connecting tubes 35Ato 35F, flows into the flow paths 33Ato 33F in the liquid header 21, and flows through one or some of the heat transfer tubes 26 connected to the flow paths 33A to 33F to reach the gas header 22. In contrast, during cooling operation or defrosting operation, the refrigerant divided into the heat transfer tubes 26 at the gas header 22 flows into the flow paths 33A to 33F of the liquid header 21, and flows from the flow paths 33A to 33F to the capillary tubes 37A to 37F to join at the refrigerant flow divider 19.

The gas header 22 has an interior not zoned but provided continuously for all the heat exchange units 31A to 31F. The refrigerant flowing from the single gas pipe 24 into the gas header 22 is accordingly divided into all the heat transfer tubes 26, and the refrigerant flowing from all the heat transfer tubes 26 into the gas header 22 is joined at the gas header 22 to flow into the single gas pipe 24.

### [Configuration of refrigerant tube]

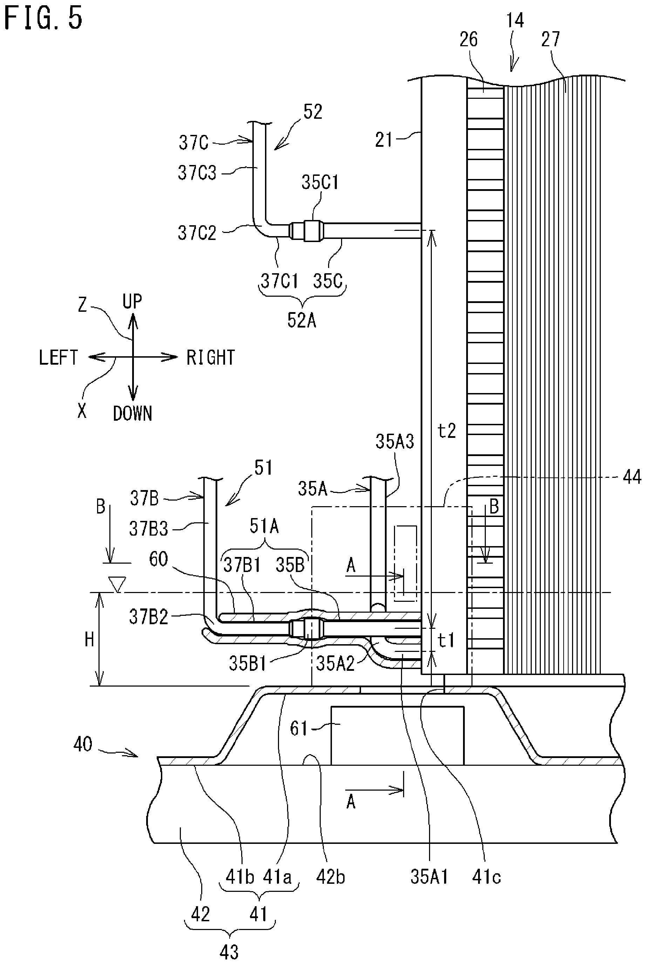

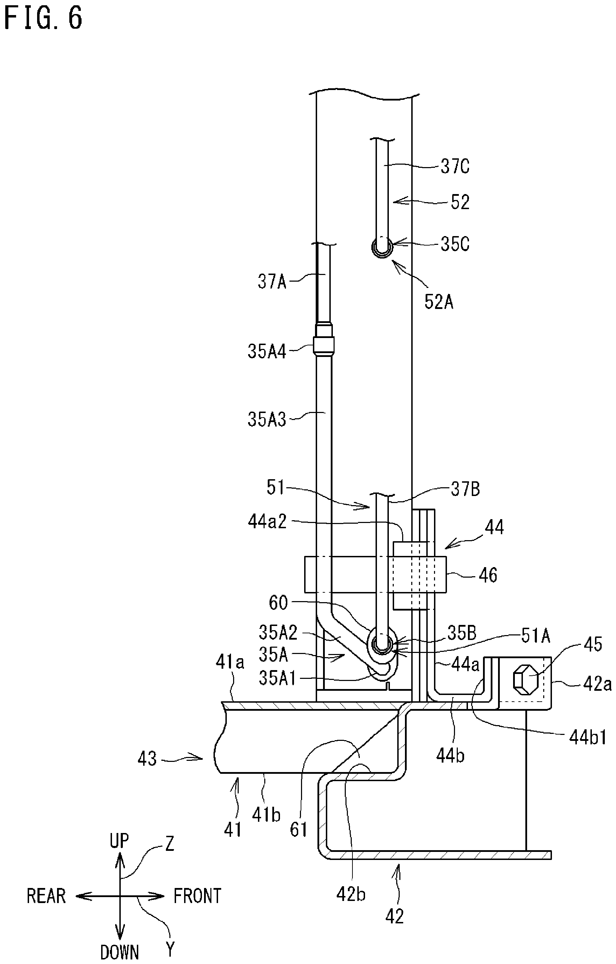

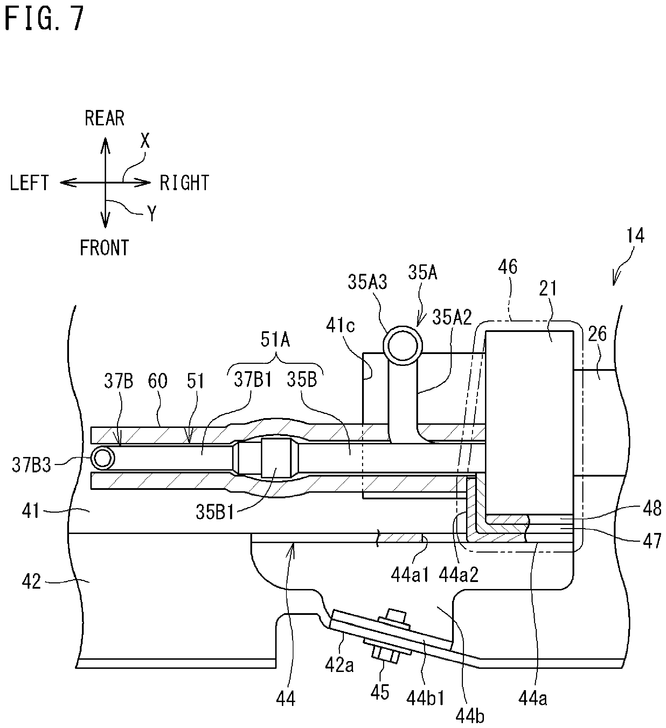

FIG. 5 is a front view of the liquid header. FIG. 6 is a left side view of the liquid header. FIG. 7 is a sectional view taken along arrow B-B indicated in FIG. 5.

As depicted in FIG. 5 and FIG. 6, among the plurality of connecting tubes 35 A to 35F, the first connecting tube 35A connected to the liquid header 21 at a lowest height and the second connecting tube 35B connected to the liquid header 21 at a second lowest height are disposed to have a first space t1 (see FIG. 5) therebetween in the vertical direction Z. The second connecting tube 35B and the third connecting tube 35C connected to the liquid header 21 at a third lowest height are disposed to have a second space t2 therebetween in the vertical direction Z.

The first space t1 is smaller than the second space t2, and the first connecting tube 35A and the second connecting tube 35B are connected to the liquid header 21 at close positions in the vertical direction Z. The first connecting tube 35A and the second connecting tube 35B are connected to the liquid header 21 at positions adjacent to the bottom plate 41 of the case 40. Specifically, the first connecting tube 35A and the second connecting tube 35B are connected to the liquid header 21 at positions lower than a predetermined height H, e.g. H = 50 mm, from the bottom plate 41 of the case 40. The third connecting tube 35C is connected to the liquid header 21 at a position higher than the predetermined height H from the bottom plate 41 of the case 40. The predetermined height H is set as a height that can be reached by ice grown due to an ice-up phenomenon to be described later.

The first connecting tube 35A includes a horizontal portion 35A1 extending linearly in a horizontal direction and in the lateral direction X from the liquid header 21, a slant portion 35A2 extending backward and diagonally upward from a distal end of the horizontal portion 35A1, and a vertical portion 35A3 extending vertically upward from an upper end of the slant portion 35A2. The vertical portion 35A3 has an upper end provided with a diameter expanding portion 35A4 having an expanding diameter.

As depicted in FIG. 5, the second connecting tube 35B extends linearly in the horizontal direction and in the lateral direction X from the liquid header 21. The second connecting tube 35B extends horizontally from the liquid header 21 beyond the horizontal portion 35A1 of the first connecting tube 35A. The second connecting tube 35B has a distal end part provided with a diameter expanding portion 35B1 having an expanding diameter.

As depicted in FIG. 5, the third connecting tube 35C extends linearly in the horizontal direction and in the lateral direction X from the liquid header 21. The third connecting tube 35C is equal in length in the lateral direction X to the second connecting tube 35B. The third connecting tube 35C is in parallel with the second connecting tube 35B. The third connecting tube 35C is disposed right above the second connecting tube 35B. The second connecting tube 35B and the third connecting tube 35C are aligned in the vertical direction Z. The third connecting tube 35C has a distal end part provided with a diameter expanding portion 35C1 having an expanding diameter.

The first to third connecting tubes 35A to 35C are connected respectively with the capillary tubes 37A to 37C of the refrigerant flow divider 19. As depicted in FIG. 6, the first connecting tube 35A is connected with the first capillary tube 37A. Specifically, the first capillary tube 37A is inserted and joined to the diameter expanding portion 35A4 of the first connecting tube 35A.

As depicted in FIG. 5, the second capillary tube 37B connected to the second connecting tube 35B includes a horizontal portion 37B1, a curved portion 37B2, and a vertical portion 37B3. The horizontal portion 37B1 extends in the horizontal direction and in the lateral direction X. The horizontal portion 37B1 has a first end connected to a distal end of the second connecting tube 35B. Specifically, the first end of the horizontal portion 37B1 is inserted and joined to the diameter expanding portion 35B1 of the second connecting tube 35B. The horizontal portion 37B1 has a second end provided continuously to the curved portion 37B2. The curved portion 37B2 is curved upward from the second end of the horizontal portion 37B1. The curved portion 37B2 is curved at an angle having about 90 degrees. The vertical portion 37B3 extends upward from the curved portion 37B2.

The third capillary tube 37C connected to the third connecting tube 35C includes a horizontal portion 37C1, a curved portion 37C2, and a vertical portion 37C3. The horizontal portion 37C1 extends horizontally in the lateral direction X. The horizontal portion 37C1 has a first end connected to a distal end of the third connecting tube 35C. Specifically, the first end of the horizontal portion 37C1 is inserted and joined to the diameter expanding portion 35C1 of the third connecting tube 35C. The horizontal portion 37C1 has a second end provided continuously to the curved portion 37C2. The curved portion 37C2 is curved upward from the second end of the horizontal portion 37C1. The curved portion 37C2 is curved at an angle having about 90 degrees. The vertical portion 37C3 extends upward from the curved portion 37C2.

Detailed description is made hereinafter to the second connecting tube 35B and the third connecting tube 35C as well as the second capillary tube 37B and the third capillary tube 37C connected thereto. In the following description, the second connecting tube 35B and the second capillary tube 37B are collectively called a "first refrigerant tube 51", and the third connecting tube 35C and the third capillary tube 37C are collectively called a "second refrigerant tube 52".

As depicted in FIG. 5, the first refrigerant tube 51 includes a first portion 51A having a first end connected to the liquid header 21 and extending horizontally. The first portion 51A includes the second connecting tube 35B and the horizontal portion 37B1 of the second capillary tube 37B.

The second refrigerant tube 52 includes a second portion 52A having a first end connected to the liquid header 21 and extending horizontally. The second portion 52A includes the third connecting tube 35C and the horizontal portion 37C1 of the third capillary tube 37C.

The first portion 51A and the second portion 52A are positioned to be overlapped with each other in the vertical direction Z. The first portion 51A and the second portion 52A are in parallel with each other, and are aligned in the vertical direction Z. The second portion 52A is shorter in the lateral direction X than the first portion 51A.

The first portion 51A of the first refrigerant tube 51 is surrounded with a heat insulating material 60. The heat insulating material 60 is wound around to entirely cover the first portion 51A. FIG. 5 and FIG. 7 depict the heat insulating material 60 in cross section. Examples of the heat insulating material 60 include publicly known members such as polyethylene foam, rigid urethane foam, and phenolic foam. The heat insulating material 60 according to the present embodiment is attached to the first portion 51A as well as to the horizontal portion 35A1 of the first connecting tube 35A disposed therebelow.

The heat insulating material 60 is provided entirely in a longitudinal direction of the first portion 51A. Specifically, the heat insulating material 60 has an end part positioned adjacent to the liquid header 21 so as to be in contact with the liquid header 21. The heat insulating material 60 has another end part positioned far from the liquid header 21 to be overlapped with the curved portion 37B2 of the first refrigerant tube 51. The heat insulating material 60 is provided in a region wider than the second portion 52A of the second refrigerant tube 52 in the lateral direction X.

The heat insulating material 60 is provided around the first portion 51A of the first refrigerant tube 51 as described above for the following reason.

During heating operation, the first and second refrigerant tubes 51 and 52 each have a flow of a refrigerant lower in temperature than outdoor air, so that condensate or frost may adhere to the first and second refrigerant tubes 51 and 52. The heat insulating material 60 is attached to the first portion 51A of the first refrigerant tube 51, to inhibit condensate or frost from adhering to the first portion 51A.

As depicted in FIG. 5, when condensate generated at the second portion 52A of the second refrigerant tube 52 or water obtained during defrosting operation drops downward from the second portion 52A, the water may adhere to the first portion 51A of the first refrigerant tube 51 disposed below the second portion 52A. The heat insulating material 60 is attached to the first portion 51A, so that the dropping water is less likely to adhere directly to the first portion 51A. This inhibits freezing of water adhering to the first portion 51A upon transition from defrosting operation to heating operation.

When water drops from the refrigerant tubes 51, 52, or the like, accumulates on the bottom plate 41 of the case 40, and freezes, there may occur the ice-up phenomenon of gradually growing ice upward. The heat insulating material 60 is attached to the first portion 51A, to inhibit the first portion 51A from being directly covered with ice even when the ice-up phenomenon occurs.

As depicted in FIG. 5, the second portion 52A of the second refrigerant tube 52 has the diameter expanding portion 35C1 having an expanding outer diameter. Water adhering to the second portion 52A sometimes flows along the second portion 52A, but such a flow may be blocked by a shape changed portion such as the diameter expanding portion 35C1 and water may drop downward. The second portion 52A has an end part positioned far from the liquid header 21 and continuously provided with the curved portion 37C2. A water flow may be blocked by a shape changed portion such as the curved portion 37C2 and water may drop downward. The heat insulating material 60 is provided around the first portion 51A right below the shape changed portion in the second refrigerant tube 52, so that dropping water does not adhere directly to the first portion 51A.

As depicted in FIG. 5, the bottom plate 41 of the case 40 is curved such that a convex portion 41a and a concave portion 41b are disposed alternately in the lateral direction X. The first portion 51A of the first refrigerant tube 51 is disposed above and adjacent to the convex portion 41a of the bottom plate 41, and is thus more likely to be covered with ice when the ice-up phenomenon occurs. The heat insulating material 60 according to the present embodiment is provided around the first portion 51A at a position above the convex portion 41a of the bottom plate 41, to inhibit the first portion 51A from being directly covered with ice in a case where the bottom plate 41, which is likely to have the ice-up phenomenon, and the first portion 51A have a short vertical distance.

The heat insulating material 60 has a first end positioned at the curved portion 37B2 of the first refrigerant tube 51. Even when water adhering to the vertical portion 37B3 flows downward and reaches the curved portion 37B2, this configuration inhibits the water from adhering to the first portion 51A.

As depicted in FIG. 5 to FIG. 7, the liquid header 21 of the outdoor heat exchanger 14 is supported by a bottom frame 43 of the case 40 via a support plate 44. The bottom frame 43 includes the bottom plate 41 described above, and legs 42 supporting the bottom plate 41 from below. The bottom frame 43 is made of a metal. As depicted in FIG. 2, the legs 42 are provided under a front end edge and under a rear end edge of the bottom plate 41 and extend in the lateral direction X. As depicted in FIG. 6 and FIG. 7, the front leg 42 has an upper surface provided with a projection piece 42a projecting upward, and the support plate 44 is attached to the projection piece 42a.

The support plate 44 is made of a metal board. The support plate 44 includes a body portion 44a disposed along a front surface of the liquid header 21, and an attachment portion 44b projecting forward from a lower surface of the body portion 44a. The attachment portion 44b includes an attachment piece 44b1 overlapped with the projection piece 42a. The projection piece 42a and the attachment piece 44b1 are coupled to each other by a bolt 45.

The body portion 44a is made of a board having a rectangular shape in a front view. The body portion 44a is provided with an opening 44a1 and a support piece 44a2. The opening 44a1 is an oblong hole penetrating the body portion 44a in front and rear direction. The support piece 44a2 projects backward from a side of the opening 44a1. As depicted in FIG. 7, the support piece 44a2 is formed by bending backward part of the body portion 44a to provide the opening 44a1.

The front surface of the liquid header 21 is disposed along part of the body portion 44a, and a left side surface of the liquid header 21is disposed along the support piece 44a2, and the body portion 44a and the liquid header 21 are bound together by a binder 46 passing through the opening 44a1, so as to couple the liquid header 21 to the support plate 44.

As depicted in FIG. 7, the support plate 44 and the liquid header 21 interpose an insulator 47 made of rubber or the like, to inhibit electrolytic corrosion due to contact between the support plate 44 and the liquid header 21. The insulator 47 and the liquid header 21 interpose a heat insulating material 48. The heat insulating material 48 inhibits heat transfer from the liquid header 21 to the support plate 44, to inhibit adhesion of condensate and frost to the support plate 44.

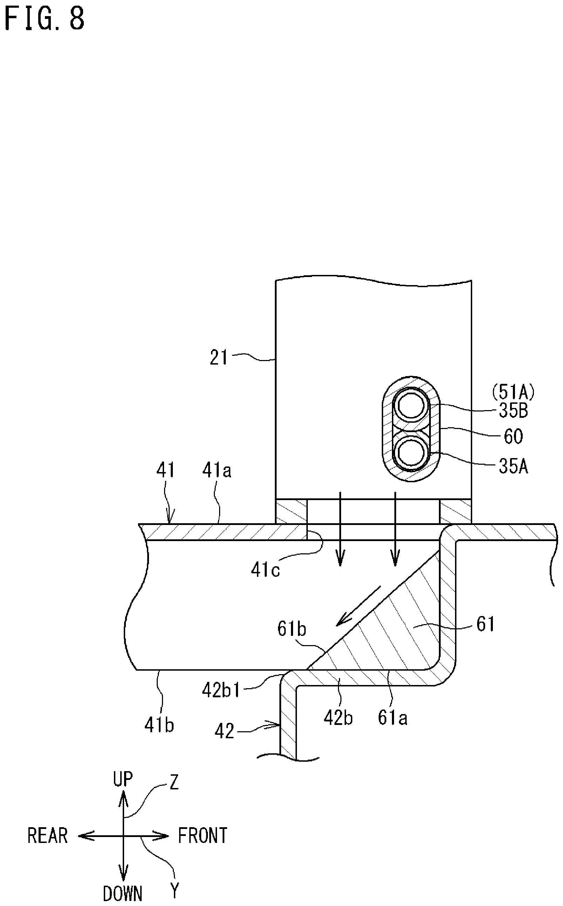

FIG. 8 is a sectional view taken along line A-A indicated in FIG. 5.

As depicted in FIG. 5, FIG. 6, and FIG. 8, the legs 42 of the case 40 each have a seat 42b supporting the concave portion 41b of the bottom plate 41 from below. As depicted in FIG. 8, the seat 42b is disposed below an opening 41c provided in the convex portion 41a of the bottom plate 41, below the first and second refrigerant tubes 51 and 52. When water adhering to the first or second refrigerant tube 51 or 52 or the liquid header 21 drops through the opening 41c, the water may accumulate on the seat 42b. The seat 42b is made of a metal. When the seat 42b is cooled by outdoor air, the accumulated water may freeze to cause the ice-up phenomenon.

The present embodiment provides a slant member 61 to inhibit freezing of water on the seat 42b. As depicted in FIG. 8, the slant member 61 has a triangular prism shape, and has a side surface 61a attached onto the seat 42b. The slant member 61 has an upper surface 61b that is slant to have a higher front portion and a lower rear portion. The upper surface 61b of the slant member 61 is sized to include an entire downward projected area of the opening 41c. The upper surface 61b of the slant member 61 has a lower end disposed adjacent to a rear edge 42b1 of the seat 42b. Accordingly, water passing through the opening 41c drops onto the upper surface 61b of the slant member 61 and flows along a slant of the upper surface 61b, to be inhibited from accumulating on the seat 42b.

The slant member 61 is made of a material lower in heat conductivity than the seat 42b made of a metal, such as rubber or a synthetic resin. Water dropping onto the upper surface 61b of the slant member 61 is thus inhibited from freezing on the upper surface 61b.

### [Other embodiments]

The above embodiment assumes that, among the connecting tubes 35 connected to the liquid header 21, the second lowest connecting tube 35B and the capillary tube 37B constitute the first refrigerant tube 51, and the third lowest connecting tube 35C and the capillary tube 37B constitute the second refrigerant tube 52. Alternatively, each of the first refrigerant tube 51 and the second refrigerant tube 52 may be constituted by a different one of the connecting tubes 35 and a different one of the capillary tubes 37.

Each of the first portion 51A of the first refrigerant tube 51 and the second portion 52A of the second refrigerant tube 52 has an end connected to the liquid header 21. The first portion 51A and the second portion 52A may not be necessarily connected to the liquid header 21, but have only to be positioned between the liquid header 21 and the flow divider body 19a of the refrigerant flow divider 19 (see FIG. 4).

The first portion A of the first refrigerant tube 51 and the second portion 52A of the second refrigerant tube 52 may be slant with respect to the horizontal direction. The first portion A of the first refrigerant tube 51 and the second portion 52A of the second refrigerant tube 52 may not be in parallel with each other. For example, one may extend in the horizontal direction and the other may be slant with respect to the horizontal direction. The first portion A of the first refrigerant tube 51 and the second portion 52A of the second refrigerant tube 52 have only to be partially overlapped with each other in the vertical direction in a planar view.

The heat insulating material 60 has only to be positioned above and correspondingly to at least the convex portion 41a of the bottom plate 41 in the first portion 51A, and may not be necessarily positioned above and correspondingly to the concave portion 41b that is hardly reached by ice grown due to the ice-up phenomenon.

The ice-up phenomenon is less likely to occur also in a case where the convex portion 41a of the bottom plate 41 is provided with the opening 41c penetrating in the vertical direction Z. Accordingly, the heat insulating material 60 may not be provided on a portion positioned above the opening 41c.

Even above the concave portion 41b or the opening 41c, the first portion 51A overlapped with the second portion 52A in the vertical direction Z may be provided with the heat insulating material 60 in order to prevent water dropping from the second portion 52A of the second refrigerant tube 52 from adhering to the first portion 51A of the first refrigerant tube 51.

Also in a case where the bottom plate 41 is not provided with the convex portion 41a, the concave portion 41b, or the opening 41c, the first portion 51A disposed above the bottom plate 41 may be provided with the heat insulating material 60. The heat insulating material 60 inhibits freezing on the first portion 51A also in this case.

The outdoor heat exchanger 14 according to the above embodiment faces the four side surfaces of the case 40. Alternatively, the outdoor heat exchanger 14 may have a substantially U shape in a top view to face three side surfaces of the case 40, or may have a substantially L shape in a top view to face two side surfaces.

Although the refrigerant flow divider 19 according to the above embodiment is disposed diagonally behind the liquid header 21, the refrigerant flow divider 19 may alternatively be disposed laterally to the liquid header 21 in the lateral directions X.

The above embodiment describes the air conditioner 1 assuming that the arrow Z indicates the vertical directions, the arrow Y indicates the front and rear directions, and the arrow X indicates the lateral directions. However, the present disclosure should not be limited to this case, and the arrow X may indicate the front and rear directions and the arrow Y may indicate the lateral directions.

### [Operation and effects of embodiments]

(1) As depicted in FIG. 5 to FIG. 7, the air conditioner 1 according to the above embodiment includes the first refrigerant tube 51 having the first portion 51A and allowing a flow of a liquid refrigerant, and the second refrigerant tube 52 having the second portion 52A positioned above the first portion 51A to be overlapped with the first portion 51A in the vertical direction Z and allowing a flow of a liquid refrigerant, and the heat insulating material 60 is provided around the first portion 51A. Even when condensate or water obtained by melting frost, adhering to the second portion 52A of the second refrigerant tube 52 drops onto the first portion 51A, the water can thus be inhibited from freezing on the first portion 51A.
(2) In the air conditioner 1 according to the above embodiment, the first portion 51A and the second portion 52A are in parallel with each other and are aligned in the vertical direction Z. Water dropping from the second portion 52A is thus likely to adhere to the first portion 51A. It is accordingly more effective to provide the heat insulating material 60 around the first portion 51A.
(3) The air conditioner 1 according to the above embodiment includes the outdoor heat exchanger 14 having the liquid header 21, and the first refrigerant tube 51 and the second refrigerant tube 52 are connected to the liquid header 21. The first portion 51A and the second portion 52A extend horizontally, and have first end parts connected to the liquid header 21. The first refrigerant tube 51 includes the curved portion 37B2 bent upward from a second end part opposite to the first end part of the first portion 51A, and the vertical portion (third portion) 37B3 extending upward from the curved portion 37B2, and the end part adjacent to the vertical portion 37B3, of the heat insulating material 60 is positioned at the curved portion 37B2. Even when water adhering to the vertical portion 37B3 flows downward along the vertical portion 37B3 and reaches the first portion 51A via the curved portion 37B2, this configuration inhibits the water from freezing on the first portion 51A.
(7) In the air conditioner 1 according to the above embodiment, the heat insulating material 60 is provided right below the position having change in shape of the second refrigerant tube 52 at least in the first portion 51A. As depicted in FIG. 5, when the diameter expanding portion 35C1, the curved portion 37C2, or the like changes the shape of the second refrigerant tube 52, the position having change in shape blocks a flow of water adhering to the second refrigerant tube 52 and the water is likely to drop downward. The heat insulating material 60 provided on the first portion 51A right below the position thus inhibits freezing of dropping water on the first portion 51A.
(8) The air conditioner 1 according to the above embodiment includes the case 40 having the bottom plate 41 and accommodating the first refrigerant tube 51, the second refrigerant tube 52, and the outdoor heat exchanger 14. The first portion 51A is disposed adjacent to the bottom plate 41. When water dropping from the first portion 51A, the second portion 52A, or the like onto the bottom plate 41 freezes and ice grows upward due to the ice-up phenomenon, the ice is likely to reach the first portion 51A. However, the heat insulating material 60 provided around the first portion 51A can inhibit the first portion 51A from being directly covered with ice.
(9) In the air conditioner 1 according to the above embodiment, the first portion 51A is disposed within the range of 50 mm (the height H in FIG. 5) from the bottom plate 41 in the vertical direction Z, and the second portion 52A is disposed within a range exceeding 50 mm from the bottom plate 41 in the vertical direction Z. Accordingly, ice growing upward from the bottom plate 41 is more likely to reach the first portion 51A. It is more effective to provide the heat insulating material 60 around the first portion 51A.
(10) In the air conditioner 1 according to the above embodiment, the heat insulating material 60 is provided right above the position not provided with the opening 41c or the concave portion 41b of the bottom plate 41 at least in the first portion 51A. The heat insulating material 60 can thus be provided on the portion that is more likely to be covered with ice due to the ice-up phenomenon.
(11) In the air conditioner 1 according to the above embodiment, the case 40 is provided with the support plate 44 supporting the liquid header 21, and the heat insulating material (second heat insulating material) 48 is provided between the liquid header 21 and the support plate 44. This inhibits frosting and freezing on the support plate 44 when the liquid header 21 cools the support plate 44.
(12) In the air conditioner 1 according to the above embodiment, the bottom plate 41 is provided with the opening 41c for drainage below the first portion 51A, the case 40 includes the legs 42 as metal components disposed below and spaced apart from the opening 41c, and the slant member 61 having the upper surface 61b slant with respect to the horizontal direction and lower in heat conductivity than the legs 42 is provided on the legs 42 below the opening 41c. Water dropping through the opening 41c of the bottom plate 41 can thus be received by the slant member 61 and flow due to the slant of the upper surface 61b of the slant member 61, to inhibit freezing of water on the legs 42.

The present disclosure should not be limited to the above exemplification, but is intended to include any modification recited in claims within meanings and a scope equivalent to those of the claims.

### REFERENCE SIGNS LIST

- 1: air conditioner
- 14: outdoor heat exchanger
- 21: liquid header
- 37B2: curved portion
- 37B3: vertical portion (third portion)
- 40: case
- 41: bottom plate
- 41b: concave portion
- 41c: opening
- 42: leg (metal component)
- 44: support plate
- 48: second heat insulating material
- 51: first refrigerant tube
- 51A: first portion
- 52: second refrigerant tube
- 52A: second portion
- 60: heat insulating material
- 61: slant member
- 61b: upper surface (slant surface)

## Claims

1. An air conditioner comprising:
a first refrigerant tube (51) including a first portion (51A), and allowing a flow of a liquid refrigerant; and
a second refrigerant tube (52) including a second portion (52A) positioned above the first portion (51A) to be vertically overlapped with the first portion (51A), and allowing a flow of a liquid refrigerant; wherein
the first portion (51A) is surrounded with a heat insulating material (60).

2. The air conditioner according to claim 1, wherein the first portion (51A) and the second portion (52A) are in parallel with each other and are aligned vertically.

3. The air conditioner according to claim 1 or 2, further comprising
a heat exchanger (14) including a liquid header (21), wherein
the first refrigerant tube (51) and the second refrigerant tube (52) are connected to the liquid header (21).

4. The air conditioner according to claim 3, wherein the first portion (51A) and the second portion (52A) extend horizontally.

5. The air conditioner according to claim 3 or 4, wherein each of the first portion (51A) and the second portion (52A) has a first end part connected to the liquid header (21).

6. The air conditioner according to claim 5, wherein
the first refrigerant tube (51) includes a curved portion (37B2) bent upward from an opposite end part of the first end part of the first portion (51A), and a third portion (37B3) extending upward from the curved portion (37B2), and
the heat insulating material (60) has an end part positioned adjacent to the third portion (37B3) and at the curved portion (37B2).

7. The air conditioner according to any one of claims 3 to 6, wherein
the heat insulating material (60) is provided right below a position having change in shape of the second refrigerant tube (52) at least in the first portion (51A).

8. The air conditioner according to any one of claims 3 to 7, further comprising
a case (40) including a bottom plate (41) and accommodating the first refrigerant tube (51), the second refrigerant tube (52), and the heat exchanger (14), wherein
the first portion (51A) is disposed adjacent to the bottom plate (41).

9. The air conditioner according to claim 8, wherein the first portion (51A) is disposed vertically within a range of 50 mm from the bottom plate (41), and the second portion (52A) is disposed vertically within a range exceeding 50 mm from the bottom plate (41).

10. The air conditioner according to claim 8 or 9, wherein the heat insulating material (60) is provided right above a position not provided with an opening (41c) or a concave portion (41b) of the bottom plate (41) at least in the first portion (51A).

11. The air conditioner according to any one of claims 8 to 10, wherein the case (40) is provided with a support plate (44) supporting the liquid header (21), and the liquid header (21) and the support plate (44) interpose a second heat insulating material (48).

12. The air conditioner according to any one of claims 8 to 11, wherein
below the first portion (51A), the bottom plate (41) is provided with an opening (41c) for drainage,
the case (40) includes a metal component (42) disposed below and spaced apart from the opening (41c), and
the metal component (42) below the opening (41c) is provided thereon with a slant member (61) having an upper surface (61b) slant with respect to a horizontal direction and being lower in heat conductivity than the metal component (42).
